# EUROPEAN PATENT SPECIFICATION

(11) **EP 0 420 685 B1**
(45) Date of publication and mention of the grant of the patent: **23.11.1994**
(21) Application number: 90310665.6
(22) Date of filing: 28.09.1990
(51) Int. Cl.: E05D 7/10, E05D 5/12, F16B 21/18

(54) **Hinges**
Scharniere
Charnières

(30) Priority: 29.09.1989 GB 8922020
(43) Date of publication of application: 03.04.1991
(73) Proprietor: Bloxwich Engineering Limited, Bloxwich Walsall West Midlands, WS3 2JR (GB)
(72) Inventor: Cheal, Jonathon Paul, Coton Green, Tamworth, Staffs (GB); Maynard, Paul, Uttoxeter, Staffs (GB)
(74) Representative: Lomas, Geoffrey Michael

(56) References cited:
- DE-A- 2 504 891
- GB-A-21 065 87
- US-A- 4 858 274

## Description

This invention relates to a method of mounting a door by means of a hinge as defined in the preamble of claim 1. Such a method is known from US-A-4 858 274
The use of robots in the assembly of vehicle bodies is increasing all the time Where the doors are to be fitted to a body on the assembly line by the use of robots it is known to secure the hinges to the door and to offer up the door to the body, complete with both parts of each hinge, then to insert the screws or other securing means by which the hinge is attached to the body. The hinge may be demountable, not in connection with this stage, but because in a subsequent stage, after the body has passed through the paint shop, the doors may need to be removed for trimming.

In one form of hinge currently used there are two vertically spaced coaxial pins. One of them has a groove to receive a spring-ring retaining clip by which the two parts of the hinge are held together. This clip can be removed if the door is to be detached from the vehicle.

Especially in hinges made from pressed leaves or knuckles, but even in the case of cast and machined leaves or knuckles there have to be certain tolerances in the dimensions of the parts, and this is particularly necessary where the hinges are to be assembled by automatic machinery. This means there will be a certain amount of vertical play in the hinge. The play does not matter in normal use, i.e. in the finished vehicle, as the weight of the door, bearing down on the one part of the hinge, always takes up the play in one direction, that is to say, with a downward-facing surface on that leaf which is attached to the door in rubbing contact with an upward-facing surface on the leaf attached to the bodywork.

A problem arises, however, during assembly by the method described above. When a door, complete with hinge attached, is offered up to the bodywork in the correct orientation, both vertically and horizontally, and then secured in place, it will subsequently drop, on release, by the amount of the tolerance in the hinges. Even though the tolerance may be small, this is not acceptable. One cannot allow for it in the design because it is an unknown variable quantity. Not only does it mean the door is not correctly aligned, but in addition it means that on a given door with two vertically spaced hinges, as the drop is unlikely to be identical in each hinge, all the weight of the door is in practice taken by only one of the two hinges.

A hinge for vehicle doors having its leaves biassed into their load bearing condition is disclosed in BE-A-361742. It is, however, the intention behind that hinge to accommodate the effect of loading on the hinge caused by shocks and oscillations in the vehicle frame.

DE-A-2504891 discloses a spring clip adapted to compensate for axial free-play and to secure a part mounted on a shaft or peg by engagement in a groove therein.

The aim of the invention is to overcome the above-mentioned problems arising in assembly. According to the invention there is provided a method of mounting a door by means of a hinge, the hinge comprising a first leaf adapted for mounting on a door and a second leaf adapted for mounting on a surface adjacent a door opening, each leaf having an abutment surface, the abutment surfaces being arranged to abut one another to transfer the weight of the door from the first leaf to the second leaf when the hinge is in use, the hinge further comprising a pin about which the leaves may rotate relative to one another, and a clip located in a groove in the pin, in which method the first leaf of the hinge is mounted on the door and the second leaf of the hinge is mounted on a surface adjacent the door opening such that the door is correctly aligned with the door opening, the door is removed for further assembly operations by separating the first and second leaves, and after such assembly operations the door is replaced by re-assembling the first and second leaves, whereby the hinge has biasing means comprising at least one resilient projection from the clip arranged to bias the abutment surfaces into contact with one another when the second leaf is not attached to the surface and is suspended from the first leaf during aligning of the door, complete with the hinge attached, with the door opening and in that, after re-assembly, no further adjustment of the hinge leaves is required to ensure that the door is correctly aligned and the clip is replaced by a conventional spring clip to retain the leaves together while the hinge is in service.

The biassing means need only be strong enough to overcome the weight of the free leaf or knuckle. Once the door has been mounted on the bodywork the weight of the door is then acting between the two parts of the hinge in the same direction as the resilient device was acting, and so there is now no relative vertical movement in the hinge when the door is released by the robot or other mounting agency (it could be mounted by hand).

Instead of being a plain resilient clip which snaps into the groove it could be a clip which is basically similar but which in addition has resilient fingers which bear down on the face of the other part of the hinge.

To facilitate its removal the special clip may have an integral laterally extending lug with a hole in it.

An example of a hinge assembly according to the invention is illustrated in the accompanying drawings, in which:-
Figure 1 is an isometric exploded view, with the door indicated in broken lines;
Figure 2 shows an elevation of the assembled hinge; and
Figures 3 and 4 are respectively a plan view and side view of the clip.

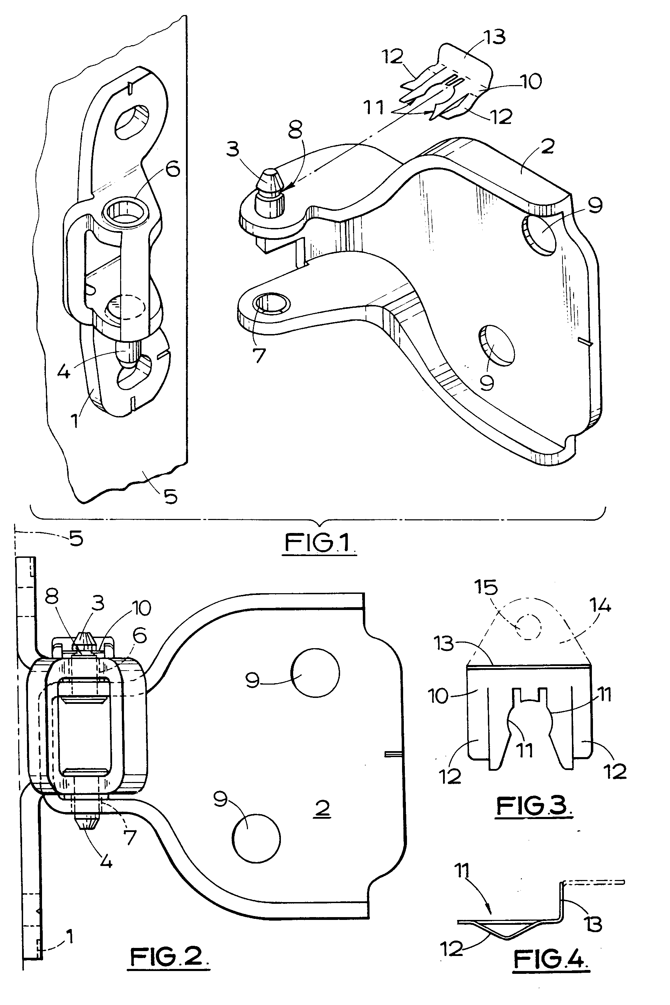

The hinge is of a generally known kind and comprises two leaves or flaps 1 and 2 releasably joined together by two separate vertically spaced coaxial pins 3 and 4. The flap 1 is secured by screws (not shown) to a vehicle door, indicated at 5 and at this stage the hinge is already assembled together with the pin 3 on the flap 2 projecting upwards through a metal-impregnated plastics bush 6 in the flap 1 and the pin 4 on the flap 1 projecting downwards through a similar bush 7 in the flap 2, as shown in Figure 2.

An annular groove 8 is formed in the upwardly projecting pin 3 to receive a clip which holds the two parts of the demountable hinge together. In the known hinge this would be a conventional spring ring such as that of the kind sold under the R.T.M. 'Circlip' or a flat sheet metal clip, but we use a different kind of clip, for the reason explained below.

The tolerances which are essential in a mass-produced automatically assembled hinge made of pressed components (but also needed even in cast and machined hinges) mean that there is a certain amount of vertical play between the two flaps of the hinge. When it is attached to the door but not to the vehicle the flap 2 will be in its lowest position (using an ordinary clip) so when a robot (or an assembly team) offers up the door to the vehicle bodywork and secures it in place by screws passing through holes 9 in the flap 2, the door will drop, as soon as it is released, by the amount of this play, which is an unknown quantity. As the two hinges are unlikely to have exactly the same amount of play, in practice all the weight will be taken by one of the hinges.

To overcome this we use the resilient sheet metal clip 10 shown in detail in Figures 3 and 4. It not only has jaws 11 which engage in the groove 8 but in addition it has a pair of resilient fingers 12 which bear down on the upper face of the flap 1, pulling the flap 2, to which the pin 3 is attached, upwards to the limit of the tolerance.

Then when the door is secured to the vehicle bodywork and released it is already in the correct vertical position and does not drop.

The fingers need only be strong enough to overcome the weight of the flap 2, and with a range of movement to take up the maximum likely tolerance. A lug 13 is provided to facilitate later removal of the clip, and it may be further extended, as indicated by broken lines in Figures 3 and 4, by a tongue 14 with a hole 15 in it, to make removal easier still. On final assembly of the vehicle it can be replaced by a normal spring ring or clip.

It will be understood that the function of the clearance-taking fingers 12 could be performed equally well by another device separate from the clip, for example a wavy washer, and it need not even be on the hinge-pin itself.

Because both hinges are secured with the flaps in their final relative vertical positions, regardless of tolerances, the load should, at least in theory, be shared equally; although in practice this ideal may not be achieved, by virtue of the invention it will at least be more nearly approached than with the known methods of assembly.

## Claims

1. A method of mounting a door by means of a hinge, the hinge comprising a first leaf (1) adapted for mounting on a door (5) and a second leaf (2) adapted for mounting on a surface adjacent a door opening, each leaf (1,2) having an abutment surface, the abutment surfaces being arranged to abut one another to transfer the weight of the door from the first leaf (1) to the second leaf (2) when the hinge is in use, the hinge further comprising a pin (3) about which the leaves (1,2) may rotate relative to one another, and a clip (10) located in a groove (8) in the pin (3), in which method the first leaf (1) of the hinge is mounted on the door (5) and the second leaf (2) of the hinge is mounted on a surface adjacent the door opening such that the door (5) is correctly aligned with the door opening, the door (5) is removed for further assembly operations by separating the first and second leaves (1,2), and after such assembly operations the door (5) is replaced by re-assembling the first and second leaves (1,2), characterised in that the hinge has biasing means comprising at least one resilient projection (12) from the clip (10) arranged to bias the abutment surfaces into contact with one another when the second leaf (2) is not attached to the surface and is suspended from the first leaf (1) during aligning of the door, complete with the hinge attached, with the door opening and in that, after re-assembly, no further adjustment of the hinge leaves (1,2) is required to ensure that the door (5) is correctly aligned and the clip (10) is replaced by a conventional spring clip to retain the leaves (1,2) together while the hinge is in service.

2. A method according to claim 1, in which each leaf of the hinge (1, 2) has a pin (3, 4) and a hole (6, 7), the pin (3, 4) of one leaf (1, 2) being received into the hole (7, 6) in the other, at least one pin (3, 4) having a groove (8) for receiving the clip (10).

3. A method according to claim 1 or claim 2 in which the clip (3) is made of resilient material and comprises first and second planar projecting members (11), the facing edges of which are adapted to be received in the groove (8) on the pin (3), each said facing edge having a recess for locating the clip (10) and retaining it in place; and third and fourth projecting members (12) extending adjacent the outer edges of the first and second projecting members (11) and being displaced in a direction normal to the plane of the first and second projecting members.

## Patentansprüche

1. Ein Verfahren zum Befestigen einer Tür mit Hilfe eines Scharniers, wobei das Scharnier ein erstes Band (1) aufweist, welches zum Befestigen an einer Tür (5) befähigt ist, sowie ein zweites Band (2), welches zum Befestigen an einer Oberfläche befähigt ist, die an eine Tür-Öffnung angrenzt, wobei jedes Band (1, 2) eine Anschlag-Oberfläche aufweist, wobei die Anschlag-Oberflächen in der Weise angeordnet sind, daß sie gegeneinander zum Anschlag gelangen, um das Gewicht der Tür von dem ersten Band (1) zu dem zweiten Band (2) zu übertragen, wenn das Scharnier sich in Verwendung befindet, wobei das Scharnier weiterhin einen Bolzen (3), um den sich die Bänder (1, 2) relativ zueinander drehen können, sowie eine Klemme (10), die in einer Nut (8) in dem Bolzen (3) untergebracht ist, aufweist, wobei in diesem Verfahren das erste Band (1) des Scharniers an der Tür (5) angebracht wird und das zweite Band (2) des Scharniers an einer der Tür-Öffnung benachbart liegenden Oberfläche angebracht wird, derart, daß die Tür (5) genau mit der Tür-Öffnung ausgerichtet ist, die Tür (5) für weitere Zusammenbau-Arbeitsvorgänge dadurch entfernt wird, daß die ersten und zweiten Bänder (1, 2) voneinander getrennt werden, und nach solchen Zusammenbau-Arbeitsvorgängen die Tür (5) dadurch wieder angeordnet wird, daß die ersten und zweiten Bänder (1, 2) wieder zusammengefügt werden,
**dadurch gekennzeichnet,**
daß das Scharnier Vorspannungs-Mittel aufweist, welche zumindest einen elastischen Vorsprung (12) von der Klemme (10) aufweisen, welcher in der Weise angeordnet ist, daß die Anschlags-Oberflächen in Berührung miteinander vorgespannt werden, wenn das zweite Band (2) nicht mit der Oberfläche befestigt und von dem ersten Band (1) abgehängt ist, während des Ausrichtens der Tür zusammen mit dem an ihr befestigten Scharnier mit der Tür-Öffnung, und daß nach dem Wiederzusammenbau keine weitere Einstellung oder Einjustierung der Scharnier-Bänder (1, 2) erforderlich ist, um zu gewährleisten, daß die Tür (5) genau ausgerichtet ist, und daß die Klemme (10) durch eine herkömmliche federnde Klemme (Federklammer) ersetzt wird, um die Bänder (1, 2) zusammenzuhalten, während sich das Scharnier in Betrieb befindet.

2. Ein Verfahren gemäß Anspruch 1, bei welchem ein jedes Band des Scharniers (1, 2) einen Bolzen (3, 4) sowie eine Bohrung (6, 7) aufweist, wobei der Bolzen (3, 4) des einen Bandes (1, 2) in der Bohrung (7, 6) in dem anderen aufgenommen ist, wobei zumindest ein Bolzen (3, 4) eine Nut (8) zum Aufnehmen der Klemme (10) aufweist.

3. Ein Verfahren gemäß Anspruch 1 oder Anspruch 2, bei welchem die Klemme (10) aus einem elastischen Material hergestellt ist und aufweist: erste und zweite, ebene, vorspringende Elemente (11), deren aufeinanderzu weisenden stirnseitigen Kanten dazu befähigt sind, in der Nut (8) an dem Bolzen (3) aufgenommen zu werden, wobei eine jede der genannten aufeinanderzu weisenden stirnseitigen Kanten eine Ausnehmung zum Unterbringen der Klemme (10) und zu deren Halten an Ort und Stelle aufweist; sowie dritte und vierte vorspringende Elemente (12), die sich angrenzend an die Außenkanten der ersten und zweiten vorspringenden Elemente (11) erstrecken und in einer Richtung normal zu der Ebene der ersten und zweiten vorspringenden Elemente verschoben sind.

## Revendications

1. Procédé de montage d'une porte au moyen d'une charnière, la charnière étant constituée d'une première pommelle (1) prévue pour être fixée sur une porte (5) et une seconde pommelle (2) prévue pour être montée sur une surface adjacente à l'embrasure de porte, chaque pommelle (1, 2) présentant une surface de butée, les surfaces de butée étant disposées pour buter l'une contre l'autre, afin de transférer le poids de la porte de la première pommelle (1) à la seconde pommelle (2), lorsque la charnière est en service, la charnière comprenant en outre un gond (3) autour duquel les pommelles (1, 2) peuvent tourner l'une par rapport à l'autre, et une pince (10) installée dans une rainure (8) du gond (3), dans un tel procédé, la première pommelle (1) de la charnière est montée sur la porte (5) et la seconde pommelle (2) de la charnière est montée sur une surface adjacente à l'embrasure de porte, de manière que la porte (5) soit correctement alignée avec l'embrasure de porte, la porte (5) est dégagée pour d'autres opérations d'assemblage en séparant la première et la seconde pommelles (1, 2) et après les opérations d'assemblage ci-dessus, la porte (5) est remise en place en assemblant à nouveau la première et la seconde pommelles (1, 2), caractérisé en ce que la charnière comporte des moyens de sollicitation comprenant au moins une protubérance (12) élastique dépassant de la pince (10) capable de solliciter les surfaces de butée pour les amener en contact l'une de l'autre lorsque la seconde pommelle (2) n'est pas fixée à la surface et se trouve suspendue par rapport à la première pommelle (1) pendant l'alignement de la porte, terminée avec la charnière fixée à l'embrasure de porte et en ce que, après la remise en place, il n'y a besoin d'aucun autre ajustement des pommelles de la charnière (1, 2) pour s'assurer que la porte (5) est correctement alignée et la pince (10) est remplacée par une pince à ressort classique pour maintenir les pommelles (1, 2) assemblées pendant que la charnière est en service.

2. Procédé selon la revendication 1, dans lequel chaque pommelle de la charnière (1, 2) comporte un gond (3, 4) et un orifice (6, 7), le gond (3, 4) de la première pommelle (1, 2) étant reçu dans l'orifice (7, 6) de l'autre pommelle, au moins un des gonds (3, 4) présentant une rainure (8) pour recevoir la pince (10).

3. Procédé selon la revendication 1 ou 2, dans lequel la pince (3) est fabriquée en un matériau élastique et comprend un premier et un second éléments en saillie (11), dont les arêtes en regard présentent un évidement pour localiser la pince (10) et la retenir en place ; et un troisième et un quatrième éléments (12) en saillie s'étendant à côté des arêtes extérieures du premier et du second éléments en saillie (11) et se trouvant décalé dans une direction perpendiculaire au plan des premier et second éléments en saillie.
